# FASCICULE DE BREVET EUROPEEN

(11) **EP 0 651 614 B1**
(45) Date de publication et mention de la délivrance du brevet: **06.05.1998**
(21) Numéro de dépôt: 94909878.4
(22) Date de dépôt: 28.03.1994
(51) Int. Cl.: A23L 1/0528, A23L 1/054, A23L 1/308, A23C 19/05, A23L 1/317, A23D 7/00

(54) **COMPOSITION ALIMENTAIRE STABILISEE**
STABILISIERTE NAHRUNGSMITTELZUSAMMENSETZUNG
STABILISED FOOD COMPOSITION

(30) Priorité: 26.03.1993 BE 9300307
(43) Date de publication de la demande: 10.05.1995
(73) Titulaire: "Raffinerie Tirlemontoise", société anonyme:, 1150 Bruxelles (BE)
(72) Inventeur: FRIPPIAT, Anne, B-1933 Sterrebeek (BE)
(74) Mandataire: Van Malderen, Michel
(86) Numéro de dépôt international: BE9400025
(87) Numéro de publication internationale: WO9422327

(56) Documents cités:
- EP-A- 0 470 870
- EP-A- 0 509 707
- EP-A- 0 532 775
- WO-A-93/06737
- DATABASE WPI Week 9251, Derwent Publications Ltd., London, GB; AN 92-418086 & JP,A,4 311 371 (AJINOMOTO KK) 4 Novembre 1992 cité dans la demande
- PATENT ABSTRACTS OF JAPAN vol. 16, no. 106 (C-919)16 Mars 1992 & JP,A,03 280 857 (AJINOMOTO CO INC) 11 Décembre 1991
- DATABASE WPI Week 9011, Derwent Publications Ltd., London, GB; AN 90-081819 & SU,A,1 482 639 (KIEV FOOD IND TECHN) 30 Mai 1989

## Description

Notre mode de vie sédentaire actuel, caractérisé par une absence quasi complète de travail physique intense, a complètement modifié les exigences alimentaires.

Bien que le besoin de nourriture énergétique soit moindre, notre alimentation est encore trop riche en sucres et en matières grasses et trop pauvre en fibres alimentaires.

De nombreuses publications médicales relayées par les médias ont sensibilisé les consommateurs à la relation existant entre une absorption trop élevée d'énergie et de graisses et des problèmes de santé tels que l'obésité, les troubles cardio-vasculaires, les troubles respiratoires, etc. D'où la prise de conscience par les consommateurs de la nécessité d'une alimentation plus saine et plus équilibrée.

En outre, l'idée que la beauté est nécessairement liée à la minceur a pour conséquence une intensification de la demande d'aliments dits "légers" (à faible teneur en calories et/ou en graisses).

Il existe donc actuellement un besoin réel de compositions alimentaires susceptibles de trouver une place dans une alimentation équilibrée, comprenant un substitut des graisses et qui conserve les propriétés gustatives et physiques des compositions alimentaires traditionnelles.

En d'autres mots, les consommateurs veulent des aliments à faible teneur calorique et à faible teneur en graisses et qui néanmoins, restent aussi appétissants que les aliments traditionnels, c'est-à-dire que ces aliments possèdent une texture, une sensation en bouche et un goût identiques.

Cependant, la diminution de la teneur en graisses dans les aliments occasionne des changements profonds de leurs caractéristiques organoleptiques.

Dans ce contexte, il est intéressant de citer ici les résultats d'un test d'évaluation sensorielle effectué par Leatherhead Food Research Associates (compte-rendu de la conférence "Development of low-fat/lower calorie food products", La Haye, mars 1992) sur des pâtes à tartiner. Les pâtes à tartiner à teneur réduite en graisses furent toujours distinguées des autres pâtes à teneur normale en graisses. Les pâtes à tartiner à teneur normale en graisses étaient caractérisées par une texture lisse et un aspect brillant, tandis que celles à teneur réduite en graisses présentaient une saveur différente et une texture granuleuse, gélatineuse et ferme.

Aussi, la diminution de la teneur en graisses dans les aliments requiert souvent l'adjonction d'additifs à ces aliments pour assurer une texture acceptable. Ainsi, dans l'exemple cité ci-dessus, les pâtes à tartiner contenaient de la gélatine, de l'amidon modifié, de la gomme xanthane et/ou du caséinate.

Un autre problème important concerne la stabilité physique et microbiologique de ces produits.

Lorsque l'on enlève simplement la graisse d'une composition alimentaire, il en résulte généralement une réduction de la matière sèche et une augmentation de la teneur en eau libre.

Ces changements dans la composition alimentaire se traduisent par une modification de l'activité de l'eau qui est une mesure de la quantité d'eau libre dans la composition alimentaire et qui influence notamment la sécurité microbiologique et la stabilité du produit.

Ainsi, des pâtes à tartiner à faible teneur en graisses nécessitent l'addition d'un agent de conservation tel que le sorbate de potassium (non ajouté dans le produit à haute teneur en graisses) et ont une durée de conservation plus courte.

L'acidité et l'activité de l'eau sont les deux principaux facteurs qui influencent la sécurité microbiologique du produit. Pour de nombreux produits, il est donc important de connaître les principes d'utilisation des acides en tant qu'agents de conservation, puisque les effets de préservation varient selon les acides et les quantités auxquelles ils sont utilisés.

### Etat de la technique

Dans le contexte d'aliments allégés, plusieurs substituts des graisses ont été mis sur le marché ou sont encore au stade de développement.

La situation actuelle des substituts des graisses a fort bien été décrite dans l'article "Les substituts des graisses, lucratifs mais risqués", paru dans International Food Ingredients, 1991, n°2, p. 4-11.

Pratiquement tous ces produits se caractérisent par une médiocre stabilité thermique ce qui limite leur utilisation à des aliments préparés à des températures assez basses.

De plus, la qualité des compositions alimentaires obtenues en utilisant ces produits se caractérise, en général, par une texture moins lisse, une sensation en bouche plus pâteuse et/ou des arômes non-souhaités.

Les avantages liés à l'utilisation d'inuline dans les composition alimentaires ont fait l'objet de demandes de brevet déposées par la société Raffinerie Tirlemontoise.

L'utilisation de fructanes tels que par exemple l'inuline dans des compositions alimentaires présente un certain nombre d'avantages:
- l'inuline est une substance aisément disponible qui peut être obtenue à partir de différentes plantes, telles que le Cichorium Intybus;
- l'inuline est un produit polydispersé de formule générale GFn (G = glucose, F = Fructose, n variant de 2 à plus de 60), les unités de fructose étant liées entre elles par une liaison β (2 → 1), et qui jouit de propriétés nutritionnelles avantageuses, telles que son effet bifidogène, son comportement de fibre alimentaire et sa très basse valeur calorique (≤ 1 kcal/g).

Dans la demande de brevet PCT/BE92/00042, l'on décrit notamment l'utilisation d'une composition ayant une structure crémeuse dans:
- de la crème glacée: pour remplacer 50% ou plus de la matière grasse avec d'excellentes caractéristiques organoleptiques;
- des gaufres: pour remplacer 50% de la matière grasse;
- des pâtes à tartiner (de type minarine) : pour remplacer partiellement l'huile et la graisse. L'on décrit la composition d'une pâte à tartiner ne contenant que 30% de matière grasse, sans altération du goût ni de la texture;
- du pâté de foie: pour remplacer une partie des graisses. L'on décrit la composition d'un pâté de foie dans lequel 30% de graisse (lard) ont été remplacés par 15% de graisse et 15% de crème d'inuline (30%), soit une réduction de la matière grasse de 50%.

Dans la demande de brevet PCT/BE92/00043, l'on décrit des compositions lipophiles hydratées et comprenant un ingrédient aqueux dans lequel l'eau est immobilisée.

La demande de brevet européen n° 532.775 (au nom de Ajinomoto) décrit un produit alimentaire qui contient un polyfructane préparé par élongation enzymatique de sucre ou d'inuline afin d'obtenir des polymères à longues chaînes. Le polyfructane ainsi préparé est utilisé pour remplacer des composants alimentaires tels que l'huile, la graisse, le sucre, les épaississants et/ou les gélifiants de produits alimentaires. Le composant alimentaire est remplacé totalement ou partiellement par ce polyfructane.

Ce remplacement est obtenu soit avec l'adjonction d'une structure pâteuse (20 ou 25%), soit avec une quantité en polyfructane équivalente à la quantité remplacée.

La demande de brevet japonaise n° 4 311 371 (au nom de Ajinomoto) décrit les propriétés de rétention d'eau d'un polyfructane de poids moléculaire compris entre 5.000 et 15.000.000. Ce polyfructane remplace une quantité identique de sucre commercial dans une crème glacée (exemple 8) ou dans de la confiture (exemples 9 et 10).

D'autre part, cette demande de brevet décrit que le polyfructane stabilise la déliquescence (la tendance à absorber de l'eau atmosphérique et à devenir liquide des produits alimentaires solides), de préférence des produits alimentaires solides, qui contiennent des produits tels que le polydextrose, le fructoligosaccharide, l'aspartame, le sorbitol, etc., qui sont connus pour être instables.

Tous les exemples et applications précités offrent des possibilités pour remplacer les graisses et/ou les sucres dans les compositions alimentaires par d'autres composants.

Cependant, la demanderesse ne cherche pas à remplacer les graisses dans les produits alimentaires par d'autres substances, mais elle cherche à enlever les graisses, et par conséquent à réduire la matière sèche du produit, sans l'addition de quantités importantes d'autres ingrédients (sauf de l'eau).

Dans le cas de la réduction des graisses dans les produits alimentaires, se pose le problème de la stabilisation microbiologique et la conservation de texture et du goût du produit obtenu lorsque la quantité de matière sèche diminue et/ou la quantité d'eau libre augmente.

Dans l'état de la technique, pour remédier à ce problème, l'on a eu recours à l'adjonction de divers additifs dans ces produits alimentaires.

Ainsi dans le brevet US 91/03270 de First World Cheese, l'on décrit la fabrication de divers types de fromages à basse teneur en graisses au départ d'un lait contenant entre 0,01% et 0,3% de matières grasses avec l'addition de carraghénane (0,06%) en tant que stabilisateur pour augmenter la rétention d'eau.

Les auteurs notent le fait, qu'en absence de carraghénane, les fromages obtenus présentent un aspect rugueux ou pâteux et une odeur non désirable.

Dans le brevet US 91/07100 de Kraft General Foods, l'on décrit la fabrication d'un fromage naturel non-gras au départ de lait écrémé auquel l'on ajoute un microgel (produit au départ d'alginates) ou un hydrocolloïde (au départ d'agar, de carraghénane, de xanthane,...) qui, selon les auteurs, procure au produit fini un goût identique à celui apporté par la matière grasse.

Il est à noter que la teneur en additifs varie de 0,5 à 50% en poids sur base de la matière sèche.

Si l'incorporation d'additifs permet dans une certaine mesure de résoudre le problème de la stabilisation des produits alimentaires allégés en graisses, leur présence dans lesdits produits suscitera des réactions de méfiance et même de rejet de la part des consommateurs sensibilisés par le concept d'une alimentation saine, dépourvue autant que possible de tout ajout "étranger". De plus, l'utilisation d'additifs dans les denrées alimentaires est strictement réglementée dans les divers pays, l'harmonisation entre les diverses législations n'étant pas encore réalisée.

### Buts de l'invention

La présente invention vise à fournir un produit alimentaire stabilisé réduit en matière sèche, en particulier en matière grasse et qui possède une texture et une sensation en bouche stabilisées, et une stabilité microbiologique dans le temps améliorée.

En particulier, la présente invention vise à fournir un produit alimentaire qui ne nécessite pas l'adjonction de quantités importantes d'additifs alimentaires comme stabilisateur, émulsifiant ou autre.

### Eléments caractéristiques de l'invention

Il est possible d'obtenir une substitution avantageuse de 5% à 75% en poids de la teneur en matière grasse dans un produit alimentaire par de faibles quantités (de 1% à 15% en poids) d'un composant alimentaire naturel comprenant un fructane ou un mélange de fructanes, tout en assurant la texture, la sensation en bouche et la stabilité microbiologique dans le temps dudit produit alimentaire et ce malgré une diminution de la teneur en matière sèche.

La composition alimentaire ainsi obtenue se caractérise par une teneur en fructane ou en mélange de fructanes de 1 à 25% par rapport à l'eau contenue dans ladite composition alimentaire sans que ce mélange ne donne lieu à la formation d'une structure crémeuse, ni ne se comporte comme une structure crémeuse, ni ne puisse être utilisé comme une crème telle que décrite dans la demande de brevet PCT/BE92/00042.

De nombreux produits alimentaires allégés dans lesquels il est fait usage d'eau ou d'un mélange d'eau et d'un substitut des graisses à la place de graisses, présentent une texture, une sensation en bouche et une stabilité microbiologique nettement moins bonnes que les produits alimentaires standards.

De manière inattendue, l'on constate que la réduction avantageuse de grandes quantités de matière grasse et l'addition de faibles quantités d'un composant alimentaire naturel comprenant un fructane ou un mélange de fructanes, dans un produit alimentaire, n'affecte pas les propriétés organoleptiques (texture, sensation en bouche, etc.) dudit produit alimentaire.

En d'autres mots, il est possible de conserver la stabilité d'un produit alimentaire en réduisant sa quantité de matière sèches (c'est-à-dire en augmentant le pourcentage en eau) en ajoutant audit produit alimentaire un fructane.

On entend par composition alimentaire stabilisée, une composition alimentaire qui comprend un composant alimentaire naturel (tel que des graisses, des sucres, ...) comprenant un fructane ou un mélange de fructanes qui permette de réduire la matière sèche dudit produit alimentaire tout en assurant sa stabilisation.

Avantageusement, ledit fructane peut par exemple consister en le produit Raftiline® mis au point et commercialisé par la société Raffinerie Tirlemontoise. La Raftiline® contient de l'inuline, substance aisément disponible obtenue à partir de nombreuses plantes largement répandues, plus spécialement dans le cas de la Raftiline® à partir du Cichorium Intybus.

L'inuline est une composition polydispersée de saccharides de formule GFn (G = glucose, F = fructose, n variant de 2 à 60), dont les unités d fructose sont liées l'une à l'autre par une liaison β (2→1).

Outre l'inuline (saccharide dont le degré de polymérisation est supérieur à 2) qui représente plus de 92% de la matière sèche, la Raftiline® contient également du glucose et du fructose (2% de la matière sèche) ainsi que du saccharose (6% de la matière sèche). La Raftiline® se caractérise donc par un goût légèrement sucré (10% de celui du saccharose) sans arrière-goût et par une odeur neutre.

En outre, la présence de saccharides de bas poids moléculaire peut provoquer des inconvénients quant à la tolérance de la Raftiline® lors de la digestion (sensation de gonflement et de pression intestinale). Aussi, il est particulièrement avantageux de réduire la proportion totale de cesdits composants dans des produits alimentaires tels que ls charcuteries et autres produits à base de viande où le pouvoir sucr ant d'un produit est particulièrement désavantageux.

Selon l'invention, il est donc avantageux de substituer la matière grasse présente dans un produit alimentaire, tel que les préparations alimentaires à base de viande, par de très faibles quantités de Raftiline®, tout en assurant la stabilité dudit produit alimentaire.

Avantageusement, le fructane ou un composant du mélange de fructanes est de l'inuline non ramifiée, de l'inuline ramifiée ou de l'inuline partiellement hydrolysée dont les propriétés nutritionnelles avantageuses sont décrites dans la demande de brevet PCT/BE91/00042 incorporée par référence.

Avantageusement, l'inuline est dépourvue de saccharides dont le degré de polymérisation est inférieur ou égal à deux, de préférence dépourvue de saccharides dont le degré de polymérisation est inférieur ou égal à 10.

L'eau dans des produits alimentaires peut exister sous forme d'eau libre ou sous forme d'eau liée. L'eau libre peut "migrer" dans le produit alimentaire, fonctionner comme solvant, réagir biochimiquement ou favoriser la croissance microbiologique.

L'eau liée est associée à d'autres entités chimiques dans le produit alimentaire par des interactions généralement faibles, mais pouvant aller jusqu'à des liaisons chimiques importantes.

L'activité de l'eau est un paramètre pour quantifier la proportion d'eau libre dans un produit.

De manière inattendue, la substitution avantageuse de 5% à 75% en poids de la teneur en matières grasses dans un produit alimentaire par de faibles quantités d'un composant alimentaire naturel comprenant un fructane ou un mélange de fructanes, ne se traduit pas par une augmentation de l'activité de l'eau, et par conséquent la quantité d'eau libre dans la composition alimentaire n'est pas augmentée.

Aussi, lesdits produits alimentaires ne nécessitent pas l'adjonction d'additifs artificiels.

L'invention sera décrite de manière plus détaillée dans les exemples suivants donnés à titre d'illustration de l'invention.

### Exemple 1: Fromage Gouda

| Composition (% en poids) | | |
|---|---|---|
| | Produit avec RAFTILINE® LS | Produit Standard |
| Lait entier (3,5% de graisse) | 47,10 | 99,2 |
| Lait écrémé | 47,10 | - |
| RAFTILINE® LS | 5,00 | - |
| β-carotène (ou annato) | q.s. | q.s. |
| Présure | q.s. | q.s. |
| Ferments lactiques | 0,80 | 0,80 |
| Chlorure de calcium | 0,02 | 0,02 |
| Nitrate de sodium | 0,005 | 0,005 |

### Procédé

Mélanger le lait entier et le lait écrémé afin d'obtenir une teneur en matière grasse de 1,7%.

Ajouter la RAFTILINE® LS (inuline dépourvue de saccharides dont le degré de polymérisation est inférieur ou égal à 2) au lait et mélanger jusqu'à l'obtention d'un mélange homogène.

Pasteuriser le lait à 75°C durant 20 secondes.

Refroidir à 30°C.

Ajouter les β-carotène, présure, ferments lactiques, chlorure de calcium et nitrate de sodium.

Après un temps de coagulation minimal de 30 min. à 30°C, travailler le coagulum à la louche et enlever le premier lactosérum.

Laver le caillé à l'eau, agiter et éliminer le second lactosérum.

Presser, saler et laisser maturer (3 semaines) le fromage.

| Caractéristiques du produit fini | | |
|---|---|---|
| | Produit avec RAFTILINE® LS | Produit Standard |
| Matière sèche (M.S.) | 47,6% | 64,0% |
| Réduction en M.S. | 25,6% | - |
| Inuline | 5,9% | - |
| Inuline/eau | 11,2% | - |
| Matière grasse | 11,1% | 29,0% |
| Matière grasse/M.S. | 23,3% | 45,3% |
| Réduction en matière grasse | 62% | - |
| Valeur calorique/100g | 219 Kcal | 365 Kcal |
| | 917 KJ | 1528 KJ |
| Réduction calorique | 40% | - |

La plupart des fromages maigres présentent une structure caoutchouteuse et aqueuse lorsque la teneur en matière grasse est diminuée à moins de 35% sur matière sèche.

En utilisant de l'inuline comme ingrédient, l'on obtient une meilleure structure et une meilleure sensation en bouche que dans le cas d'un fromage maigre sans inuline.

Ceci est applicable aux fromages maigres dont la teneur en matière grasse varie de moins de 10% à 35% sur la matière sèche et à toutes les sortes de fromages tels que les fromages à pâte dure (p.ex. Gouda, Cheddar), les fromages à pâte mi-dure (p.ex. St Paulin, Munster), les fromages à pâte molle (p.ex. Port-Salut, Brie, Camembert), les fromages au lactosérum, les fromages aux herbes, les fromages fumés...

Ainsi, en ajoutant 5% en poids de RAFTILINE® LS et en remplaçant de l'ordre de 50% du lait entier par du lait écrémé, il a été obtenu un fromage Gouda dont la matière sèche a été réduite de 26% et qui ne contient plus que 23,3% de matière grasse sur matière sèche, soit une réduction de 62% par rapport à un fromage entier contenant 45,3% de matière grasse sur matière sèche. Ce fromage réduit en matière grasse présente une texture lisse et tendre, comparable au produit de référence riche en matière grasse.

### Exemple 2: Saucisse de foie

| Composition (% en poids) | | |
|---|---|---|
| | Produit avec RAFTILINE® LS | Produit Standard |
| Foie de porc | 30,00 | 30,00 |
| Cervelle de porc | 10,00 | 10,00 |
| Tête de porc | 35,5 | 6,6 |
| Joues de porc | 3,3 | 50,0 |
| Graisse de porc | - | 1,0 |
| Eau | 9,80 | - |
| Mélange d'épices | 0,60 | 0,60 |
| Sel nitrité (0,9%) | 1,80 | 1,80 |
| RAFTILINE® LS | 9,00 | - |

### Procédé

La tête et les joues de porc sont mises dans de la saumure contenant le sel nitrité. Après un séjour de 24 heures à 15°C, la viande ainsi que la saumure et la RAFTILINE® LS sont bouillies pendant 90 minutes à 90°C. On prépare ensuite la farce avec le foie, la cervelle et le mélange d'épices. La préparation de l'émulsion se fait dans un hachoir à bol à cuisson sous vide. Les émulsions sont introduites dans des boyaux immédiatement après leur préparation et chauffées à 80°C pendant 90 minutes. Après 60 minutes de refroidissement, les saucisses sont conservées à 4°C.

| Caractéristiques du produit fini | | |
|---|---|---|
| | Produit avec RAFTILINE® LS | Produit Standard |
| Matière sèche (M.S.) | 37,2% | 49,4% |
| Réduction en M.S. | 24,7% | - |
| Raftiline® LS | 8,5% | - |
| Raftiline® LS/eau | 13,5% | - |
| Matière grasse | 12,7% | 32,9% |
| Réduction en matière grasse | 61% | - |
| Protéines de viande | 13,3% | 13,6% |
| Valeur calorique/100g | 182 Kcal | 369 Kcal |
| | 762 KJ | 1544 KJ |
| Réduction calorique | 51% | - |

Dans les produits de viande, tels que saucisse de foie, saucisse de Francfort, hamburgers, il est possible de diminuer la teneur en matière grasse par l'utilisation de viande maigre et d'eau et par la combinaison eau-substitut de matière grasse, mais avec comme conséquence, une structure trop tendre et humide, un goût d'eau en bouche et une médiocre stabilité microbiologique.

En utilisant de l'inuline comme ingrédient, l'on obtient des produits très proches au point de vue texture et sensation en bouche des produits gras. De plus, le paramètre activité de l'eau se trouve diminué de façon telle que la stabilité microbiologique s'en trouve améliorée.

Ainsi, en ajoutant 9% en poids de RAFTILINE® LS à une composition de saucisse de foie caractérisée par un pourcentage en poids de tête de porc de 35,5% (au lieu de 6,6% dans le produit standard) et de joues de porcs de 3,3% (au lieu de 50%), en supprimant 1% de graisse et en incorporant 9,8% d'eau, il a été obtenu une saucisse de foie dont la teneur en matière sèche est réduite de 24,7% et qui ne contient que 12,7% de matière grasse (au lieu de 32,9%), soit une réduction de 61% par rapport au produit standard.

Les résultats des mesures de l'activité d'eau, ainsi que de la dureté (exprimée en Newton), effectuées sur une saucisse standard, sur une saucisse allégée contenant 9% en poids de RAFTILINE® LS et sur une saucisse allégée préparée comme décrit ci-dessus mais ne contenant pas de RAFTILINE® LS sont repris au tableau suivant:

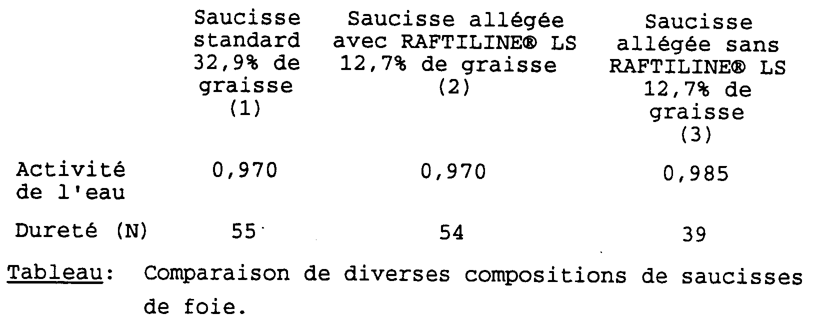

De ces résultats, il ressort clairement que par l'incorporation de Raftiline® LS, la saucisse allégée présente pratiquement les mêmes caractéristiques physiques que celles d'une saucisse standard. De plus, un panel de dégustateurs de 20 personnes a nettement donné la préférence aux saucisses (1) et (2) en ce qui concerne le goût et la texture.

### Exemple 3: Pâte à tartiner

| Composition (% en poids) | | |
|---|---|---|
| | Produit avec RAFTILINE® LS | Produit Standard |
| Phase grasse | 20,00 | 80,00 |
| Huile de soya | 11,86 | 56,40 |
| Huile de soya 38 | 4,40 | 15,09 |
| Huile de soya hydrogénée 45 | 1,92 | 3,97 |
| Huile de palme | 0,96 | 3,97 |
| Emulsifiant (Grindsted Triodan R90) | 0,50 | - |
| Emulsifiant* | 0,36 | 0,80 |
| β-carotène (5,3%) | 0,02 | q.s. |
| Arôme (Grindsted flavour 2934) | 0,02 | q.s. |
| Phase aqueuse (pH 4,7) | 80,00 | 20,00 |
| Eau | 63,38 | 18,40 |
| RAFTILINE® LS | 10,00 | - |
| Poudre de lactosérum écrémé | | 1,00 |
| Sorbate de potassium | 0,10 | 0,10 |
| Sel | 0,50 | 0,50 |
| Arôme (Grindsted flavour 2935) | 0,02 | q.s. |

| | | |
|---|---|---|
| * Grindsted Dimodan LS pour le produit avec RAFTILINE® LS et Grindsted Lecidan/Lecithine dans un rapport 1:1 pour le produit standard. | | |

### Procédé

Mélanger le sel, le sorbate de potassium et l'arôme dans l'eau. Ajuster le pH à 4,7 à l'aide d'acide lactique. Chauffer à 80°C. Ajouter la RAFTILINE® LS sous agitation. Homogénéiser la solution à 45°C.

Préparer le mélange d'huiles.

Chauffer à 45°C. Verser lentement la phase aqueuse dans la phase grasse tout en mélangeant vigoureusement (éviter l'incorporation de bulles d'air). Maintenir l'émulsion à 45°C et refroidir à 10°C dans un échangeur de chaleur de type Schröder.

Emballer et conserver au réfrigérateur.

| Caractéristiques du produit | | |
|---|---|---|
| | Produit avec RAFTILINE® LS | Produit Standard |
| Matière sèche (M.S.) | 29,5% | 80,0% |
| Inuline | 9,4% | - |
| Inuline/eau | 13,3% | - |
| Matière grasse | 20,0% | 80,0% |
| Réduction en matière grasse | 75% | - |
| Valeur calorique/100g | 190 Kcal | 724 Kcal |
| | 795 kJ | 3029 kJ |
| Réduction calorique | 74% | - |

### Exemple 4 : Mayonnaise.

| Composition (% en poids) | | |
|---|---|---|
| | Produit avec RAFTILINE® ST | Produit Standard |
| Eau | 59,7 | - |
| Sucre | 12,2 | 3,0 |
| Vinaigre | 6,6 | 6,0 |
| RAFTILINE® ST | 5,4 | - |
| Amidon de mais | 5,9 | 3,0 |
| Sel | 1,8 | 1,5 |
| Sorbate de potassium | 0,1 | 0,05 |
| Huile de soja | 2,7 | 80,0 |
| Oeuf entier | 5,4 | - |
| Moutarde | 0,2 | 1,5 |
| Jaune d'oeuf | - | 5,0 |

### Mode opératoire.

Disperser le sorbate de potassium, le Raftiline® ST et l'amidon dans l'eau.

Mélanger jusqu'à homogénisation.

Ajouter le sucre, le vinaigre et le sel tout en mélangeant.

Chauffer à 85°C et refroidir pour obtenir une pâte.

Mélanger la moitié de la pâte obtenue avec l'huile.

Ajouter les oeufs et aérer pendant deux minutes.

Ajouter la moutarde et le reste de la pâte.

Mélanger bien et homogénéiser avant de conditionner.

| Caractéristiques du produit fini. | | |
|---|---|---|
| | Produit avec RAFTILINE® ST | Produit Standard |
| Matière sèche (M.S) | 27,5% | 87,6% |
| Matière grasse | 2,7% | 80,0% |
| Inuline | 4,7% | - |
| Réduction en matière grasse | 97 | - |
| Kcal / 100 g | 102 | 744 |
| Réduction en calories | 86% | - |
| Valeur Aw | 90,6 | 89,9 |
| Réduction en M.S. | 68,6 | - |
| Proportion inuline / eau | 6,5 | - |

## Revendications

1. Composition alimentaire dans laquelle 5 à 75% en poids de la matière grasse par rapport à une composition alimentaire standard, sont substitués par 1 à 15% en poids d'un fructane ou d'un mélange de fructanes, sans que la quantité d'eau libre dans la composition ne soit augmentée par rapport à la composition standard, la teneur en fructane ou mélange de fructanes par rapport à l'eau contenue dans ladite composition est de 1 à 25% et en ce que les propriétés organoleptiques et la stabilité microbiologique dans le temps de ladite composition alimentaire sont identiques à celles d'une composition standard.

2. Composition alimentaire selon la revendication 1, caractérisée en ce que le fructane ou un composant du mélange de fructanes est un fructane linéaire, un fructane ramifié et/ou un fructane partiellement hydrolysé.

3. Composition selon la revendication 2, caractérisée en ce que le fructane est de l'inuline.

4. Composition selon la revendication 3, caractérisée en ce que l'inuline est dépourvue de saccharides dont le degré de polymérisation est inférieur ou égal à 2.

5. Composition selon la revendication 3, caractérisée en ce que l'inuline est dépourvue de saccharides dont le degré de polymérisation est inférieur ou égal à 10.

6. Composition selon l'une quelconque des revendications précédentes, qui est un fromage.

7. Composition selon l'une quelconque des revendications 1 à 5, qui est un produit de viande.

8. Composition selon l'une quelconque des revendications 1 à 5, qui est une pâte à tartiner.

9. Composition selon l'une quelconque des revendications 1 à 5, qui est une mayonnaise

## Claims

1. Foodstuff composition wherein 5 to 75% by weight of fat content based on a standard foodstuff composition are substituted by 1 to 15% by weight of a fructan or a fructan mixture, without the quantity of free water in the composition being increased based on the standard composition, the content in fructan or fructan mixture based on the water contained in said composition is 1 to 25% and such that the organoleptic properties and time microbiological stability in said foodstuff composition are identical to those of a standard composition.

2. Foodstuff composition according to claim 1, characterized in that the fructan or one component of the fructan mixture is a linear fructan, a branched fructan and/or a partially hydrolyzed fructan.

3. Composition according to claim 2, characterized in that the fructan is inulin.

4. Composition according to claim 3, characterized in that inulin is free from saccharides the polymerization degree of which is lower or equal to 2.

5. Composition according to claim 3, characterized in that inulin is free from saccharides the polymerization degree of which is lower or equal to 10.

6. Composition according to any of preceding claims, which is a cheese.

7. Composition according to any of claims 1 to 5, which is a meat product.

8. Composition according to any of claims 1 to 5, which is a spreading paste.

9. Composition according to any of claims 1 to 5, which is a mayonnaise.

## Patentansprüche

1. Nahrungsmittelzusammensetzung, bei der gegenüber einer Standard-Nahrungsmittelzusammensetzung 5 bis 75 Gewichtsprozent des Fetts durch 1 bis 15 Gewichtsprozent eines Fruktans oder eines Gemischs von Fruktanen ersetzt sind, ohne daß die Menge des freien Wassers bei der Zusammensetzung gegenüber der Standardzusammensetzung erhöht ist, der Gehalt an Fruktan oder an dem Gemisch von Fruktanen bezüglich des in der Zusammensetzung enthaltenen Wassers 1 bis 25% beträgt, und die organoleptischen Eigenschaften und die mikrobiologische zeitliche Stabilität der Nahrungsmittelzusammensetzung identisch mit denjenigen einer Standardzusammensetzung sind.

2. Nahrungsmittelzusammensetzung gemäß Anspruch 1, dadurch gekennzeichnet, daß das Fruktan oder ein Bestandteil des Gemischs von Fruktanen ein lineares Fruktan, ein verzweigtes Fruktan, und/oder ein teilweise hydrolysiertes Fruktan ist.

3. Zusammensetzung gemäß Anspruch 2, dadurch gekennzeichnet, daß das Fruktan Inulin ist.

4. Zusammensetzung gemäß Anspruch 3, dadurch gekennzeichnet, daß das Inulin frei von Sacchariden ist, deren Polymerisationsgrad kleiner oder gleich 2 ist.

5. Zusammensetzung gemäß Anspruch 3, dadurch gekennzeichnet, daß das Inulin frei von Sacchariden ist, deren Polymerisationsgrad kleiner oder gleich 10 ist.

6. Zusammensetzung gemäß irgendeinem der vorhergehenden Ansprüche, wobei die Zusammensetzung ein Käse ist.

7. Zusammensetzung gemäß irgendeinem der Ansprüche 1 bis 5, wobei die Zusammensetzung ein Fleischprodukt ist.

8. Zusammensetzung gemäß irgendeinem der Ansprüche 1 bis 5, wobei die Zusammensetzung eine Streichpaste ist.

9. Zusammensetzung gemäß irgendeinem der Ansprüche 1 bis 5, wobei die Zusammensetzung eine Mayonnaise ist.
